# EUROPEAN PATENT APPLICATION

(11) **EP 4 489 228 A1**
(43) Date of publication of application: **08.01.2025**
(21) Application number: 23183373.2
(22) Date of filing: 04.07.2023
(51) Int. Cl.: H01R 13/627

(54) **CONNECTOR WITH CANTED COIL SPRING**

(71) Applicant: TE Connectivity India Private Limited, Bangalore, Karnataka 560066 (IN); Tyco Electronics (Shanghai) Co., Ltd., Pilot Free Trade Zone Shanghai 200131 (CN); TE Connectivity Svenska AB, 194 26 Upplands Vasby (SE)
(72) Inventor: Singh, Siddarth, 560066 Bangalore (IN); Dai, Zifu, Shanghai, 200131 (CN); Zhang, Haibo, Shanghai, 200131 (CN); He, Wenke, Shanghai, 200131 (CN); Andersson, Hans Magnus Emil, 194 26 Upplands Väsby (SE)
(74) Representative: Grünecker Patent- und Rechtsanwälte PartG mbB

(57) **Abstract**

This application relates to a connector comprising a wall with a mounting hole; a canted coil spring extending along a perimeter; and a mounting assembly adapted to attach the canted coil spring to the wall, the mounting assembly comprising an attachment element adapted to hook around a turn of the canted coil spring and reaching into the mounting hole of the wall.

## Description

The invention relates to a connector with a canted coil spring. Preferably the connector is an electrical connector and/or a bulkhead connector for an electrical mating connector.

Canted coil springs are known for their beneficial deflective characteristics over a wide range of operating conditions. Moreover, such coil springs may provide electromagnetic shielding and may also conduct electrical current, in particular, when the canted coil spring is made of an electrically conductive material (such as metal, copper, and/or comprises a metal alloy).

Typically, a canted coil spring refers to a special type of a helical spring of which the longitudinal direction is bent into an annular shape. In other words, the longitudinal direction is bent into a circle or ring. The windings of the canted coil spring canted are bent with respect to the cross-section perpendicular to the bent longitudinal direction. The base form of a canted coil spring can also deviate from a ring, circle or ellipsis. In general, the base form may also follow any other closed 2-dimensional regular polygon, such as a rectangular, a hexagon, an octagon, etc. As such, the canted coil spring defines a perimeter that encloses a major interior area within the spring.

Unlike conventional helical springs with circular cross-sections, canted coil springs all have an oval footprint or base perpendicular to their longitudinal extension. The axial direction preferably extends perpendicular to the area that is bound and/or defined by the perimeter.

There is a need of fixing the canted coil spring to a connector without impairing its flexibility and characteristics when compressed. However, the fixation must be durable and cost efficient.

This need is addressed by providing a connector comprising a wall with a mounting hole, a canted coil spring extending along a perimeter and a mounting assembly adapted to attach the canted coil spring to the wall. The mounting assembly comprising an attachment element adapted to be hooked around a turn of the canted coil spring and reaching into the mounting hole of the wall.

Advantageously, the attachment element forms a form-fit connection with the coil spring and ensures the firm attachment of the spring to the wall or connector.

The above solution may be further improved by adding one or more of the following optional features. Hereby, each of the following optional features is advantageous on its own, and may be combined independently with any other optional feature.

According to an aspect, the attachment element may hook around a wire section of the canted coil spring. The wire section hereby denotes a portion of the wire of the canted coil spring that has the same extension as the cross-section of the wire.

According to another aspect, the attachment element may form a hook around the wire of the coil spring, wherein a bending diameter of the hook is essentially equal to the wire diameter, i.e. in particular, equal to the larger of the cross-sectional wire diameter.

Said perimeter, along which the coil spring extends, may define a 2-dimensional area in a plane, wherein the two dimensional area corresponds to a major opening of the canted coil spring. A line normal to the plane may be parallel to an axial compression direction of the canted coil spring.

According to another aspect, the canted coil spring is made of an electrically conductive material. For example, the material may be platinum, bismuth, tungsten, iron, gold, silver, copper, nickel, lead, aluminum, zinc, or any alloy of the aforementioned chemical elements. According to another aspect, the canted coil spring may be made of a polymer material and an outer shell of the spring may comprise a galvanized layer to provide an electrically conductive layer.

According to another aspect, the attachment element may run through an interior of the canted coil spring. In particular, the interior may be defined by adjacent windings or turns of the canted coil spring. In other words, the interior extends between adjacent turns of the coil spring. In contrast to said interior, the major opening of the canted coil spring is defined and limited by bending the spring along the longitudinal direction.

According to another aspect and as indicated above, the canted coil spring may form a ring, donut or torus.

According to another aspect, the canted coil spring may encompass a hole.

According to another aspect, the canted coil spring may extend circumferentially around a shaft or a stub axle of the connector. The stub axle may protrude from the wall of the connector towards the coil spring.

Beneficially, the stub axle or shaft may hold or support the coil spring.

According to another aspect, the canted coil spring may circumferentially extend around a feedthrough hole of the connector.

Beneficially, the coil spring may shield a signal-carrying medium running through the feedthrough hole from pollution or from electromagnetic radiation.

According to another aspect of the invention, the canted coil spring may form a closed loop defining a flat plane, wherein the direction of axial compression of the canted coil spring is parallel to the surface normal vector of the plane.

According to another aspect, the wall of the connector may comprise at least two mounting holes, the at least two mounting holes including said mounting hole. The mounting assembly may comprise separate attachment elements for each mounting hole, which engage with a respective mounting hole of the at least two mounting holes.

According to another aspect, the wall may comprise at least two mounting holes, wherein two of the at least two mounting holes form a pair of mounting holes, wherein the pair includes said mounting hole, and wherein the attachment element is fixed to the wall by engaging to the pair of mounting holes. The mounting assembly may comprise separate attachment elements for each pair of mounting holes. For example, when the wall comprises three pairs of mounting holes, the mounting assembly comprises a separate attachment element for a pair of mounting holes that receives the attachment element. In the case of the example, the connector would have three attachment elements for the three pairs of mounting holes. Beneficially, the canted coil spring may be firmly attached to the connector.

According to another aspect, the mounting assembly comprises a plurality of attachment elements, each one adapted to attach the canted coil spring at a respective mounting hole of the at least two mounting holes to the wall, and wherein the plurality of attachment elements includes said attachment element.

According to another aspect, wherein the attachment elements of the mounting assembly may be arranged in an n-fold rotational symmetric arrangement around a central axis of the canted coil spring. The central axis may run through the center of the canted coil spring. The center may be the mass center of the coil spring, and the central axis may run parallel to the axial compression direction of the coil spring. Likewise, the mounting holes or pairs of mounting holes adapted to receive a respective attachment element of the mounting assembly may be arranged in the n-fold rotational symmetric arrangement around the central axis of the canted coil spring. The n-fold rotational symmetric arrangement may for example be 2-fold, 3-fold, 4-fold, 5-fold, 6-fold, or more.

The cardinality of the attachment elements in the mounting assembly may be increased in order to improve the stability of the attachment of the coil spring to the connector. Likewise, the use of a rotational symmetric arrangement of the attachment elements may further increase the stability of the attachment of the coil spring to the connector.

As indicated above, the central axis may run parallel to the axial compression direction of the coil spring and may extend through a center of a 2-dimensional area within the coil spring defined by the perimeter of the coil spring. The central axis of the coil spring may be a major central axis that acts as a rotational axis around which a wire of the coil spring extends.

According to another aspect, the mounting assembly may comprise an attachment element of the following groups of attachment elements: solder tin, an adhesive, welded seam, a clip, a wire clip, a plastic clip, or a bent clip. In other words, the attachment element may be solder tin, an adhesive (silicone), welded seam, a clip, a wire clip, a plastic clip, or a bent clip. Clips may come in various shapes and sizes and may be made of a wide range of materials including metal, plastic or even paper.

According to another aspect, the attachment element has two legs, wherein at least one of the two legs is bent towards the wall on a side of the wall facing away from the canted coil spring. In other words, the leg is bent on the backside of the wall and the canted coil spring rests on a front side of the wall. In particular, the bent leg may penetrate through the mounting hole towards the backside of the wall, and may be bent further towards the backside of the wall. An end portion of the bent leg may form a form-fit connection with the backside of the wall.

According to another aspect, the canted coil spring may have a slant angle of less than 45°.

According to another aspect, the canted coil spring may have a slant angle between 20° and 30°. The selection of the slant angle may optimize a force needed to compress the coil spring depending on the application-specific requirements of the connector.

According to another aspect, the wall of the connector may be penetrated by a feedthrough opening or a feedthrough hole, wherein canted coil spring encompasses an outer contour of the feedthrough opening or a feedthrough hole. Preferably, the canted coil spring may then have an annular shape, such as donut, torus or a ring.

According to another aspect, the connector further comprises a stub axle to hold the canted coil spring, wherein the stub axle may protrude from the wall towards the canted coil spring. The stub axle may be a shaft. The cross section of the stub axle may be preferably elliptical or round, for example, the outer circumference may form a circle. Alternatively, the perimeter of the cross section of the stub axle may form a regular polygon, such as a rectangular, a hexagon or an octagon.

According to another aspect, the canted coil spring may form a closed loop. The coil spring may define an axial opening, such as a void or a bore extending axially through the center of the canted coil spring along a longitudinal axis of the connector.

According to another aspect, the connector is one of a bulkhead connector, an electrical connector, a radio connector, a bulkhead feedthrough connector, a bulkhead electrical connector, a bulkhead radio connector, and/or an optical fibre connector.

The claimed subject matter also relates to a connector with a bulkhead. According to an aspect, the wall of the connector is the bulkhead.

As used herein, the term "and/or" includes any and all combinations of one or more of the associated listed items and may be abbreviated as "/".

Further, as used herein, the term "coil spring" is an abbreviated notation for "canted coil spring", unless explicitly stated otherwise.

In the following, the invention is described exemplarily with reference to embodiments and with reference to the drawings. The combination of features that are shown in the embodiments is not to be considered as limiting. For example, features of the embodiments which have a technical effect as e.g. explained above, that is not needed in a specific application, may be omitted. Conversely, features described above that are not part of an embodiment described below may be added if the technical effect associated with this particular feature is needed in a specific application.

Throughout the description and the drawings, the same reference numerals are used for elements that correspond to each other with respect to function and/or structure.

A connector is a mechanical device that may be used to create a connection between different components of a network, such as an electrical circuit. A network may also be made of optical fibers instead of electrical conductors, such as wires. Due to the variety of types of networks, a connector may be an electrical connector that connects electrical circuits or the connector may be an optical fiber connector that joins optical fibers.

The term bulkhead mount refers to a mounting style of a connector. It is a method used for attaching a connector to a product casing, enclosure, or a panel from a front or rear side. A bulkhead connector may be used instead of a continuous feedthrough of a medium, such as a wire or an optical fibre, when there is a need to disconnect the medium from the mating connector. A bulkhead feedthrough connector is a type of connector that is used to provide a sealed connection between two separate environments or compartments of a device. This type of connector is commonly used in applications where it is necessary to pass electrical or other signals between the two compartments, while maintaining the integrity of the barrier between them. Preferably, an opening may be disposed in the center of the bulkhead.

In the drawings,
- Fig. 1: illustrates the connector according to the invention;
- Fig. 2: illustrates a cut view through section A-A' of Fig. 1;
- Fig. 3: illustrates an alternative of the detail B of Fig. 2;
- Fig. 4: illustrates another alternative of the detail B of Fig. 2;
- Fig. 5: illustrates a connector with a rectangular shaped canted coil spring,
- Fig. 6a: illustrates a bottom view of a connector without attachment elements assembled thereto;
- Fig. 6b: illustrates the connector from Fig. 6a with attachment elements assembled thereto;
- Fig. 7: illustrates a connector with a stub axle;
- Fig. 8: illustrates a cut view to a connector with a stub axle;
- Fig. 9: illustrates a top view of a connector with a stub axle;
- Fig. 10: illustrates a side view of a connector with a stub axle;
- Fig. 11: illustrates a magnified side view of detail C in Fig. 10; and
- Fig. 12: illustrates a cut side view of the connector of Fig. 9.

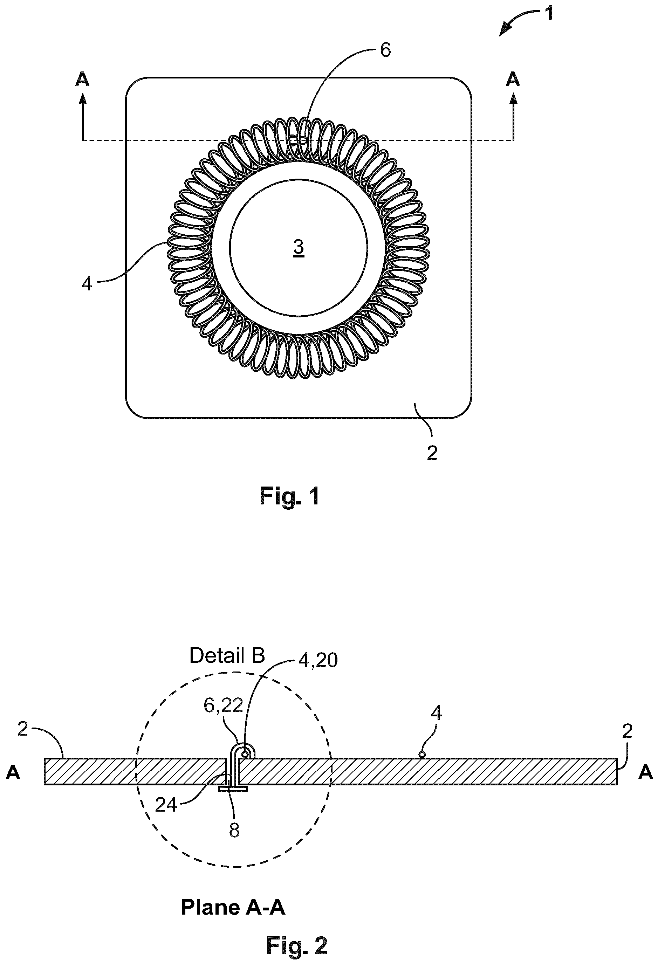

First, an exemplary embodiment of the invention is described with reference to Fig. 1.

Figure 1 illustrates a connector 1. Preferably the connector 1 is an electrical connector, an optical fiber connector and/or a bulkhead connector. The connector 1 comprises a wall 2. The wall 2 may be a bulkhead of the connector. Optionally, the connector 1 may also include a feedthrough hole 3. Preferably the feedthrough hole 3 is positioned in the center of the wall 2. The connector further comprises a canted coil spring 4. The canted coil spring 4 in the illustrated example has an annular shape (This shape may also be referred to as a torus shape or donut shape). In general, the canted coil spring 4 as used in the invention, forms a closed path. In other words, the coil spring 4 may enclose an opening, such as the feedthrough hole 3.

The coil spring 4 may further be made of plastic material and/or polymer material. An outer shell of the coil spring 4 may comprise a galvanized layer to provide an electrically conductive layer. Alternatively, the coil spring 4 may be made of an electrically conductive material, such as platinum, bismuth, tungsten, iron, gold, silver, copper, nickel, lead, aluminum, zinc, or any alloy of the aforementioned chemical elements.

The coil spring 4 may be attached to the wall 2 by a mounting assembly. The mounting assembly may comprise one or more attachment elements 6. The attachment element 6 may hook around a turn or winding of the coil spring 4. Thereby, the attachment element 6 may engage in a form-fit connection with the canted coil spring 4. Preferably, the tip of the attachment element 6 may abut against the wall 2.

Further, the attachment element 6 may reach into a mounting hole 8 within the wall 2. Thereby, the canted coil spring 4 may be held by the attachment element 6 where the mounting hole 8 is located on the wall 2.

Without limiting generality, the wall 2 defines a surface against which the coil spring 4 may be compressed in an axial direction A. The axial direction A may correspond to an insertion direction I of the connector 1. The axial direction A may run perpendicular to a radial compression direction of the canted coil spring.

Fig. 1 further indicates a line for generating a cut view along the cut plane A-A. For the sake of completeness, it is stated that the arrows indicating the cut plane A-A in Fig. 1 are not to be confused with the axial direction A of the canted coil spring 4. In the example of Fig. 1, the axial direction A (as well as the insertion direction I of the connector 1) would protrude vertically from the sheet of paper on which Fig. 1 is illustrated. In other words, the axial direction would stand perpendicularly from the wall 2 of the connector 1.

Figure 2 illustrates a cut view through section A-A in the connector 1 of Figure 1. In the illustrated embodiment, the mounting hole 8 is a through-hole. A through hole is a hole that is made to go completely through the material of an object. In contrast, a blind hole is a hole that is reamed, drilled, or milled to a specified depth without breaking through to the other side of the workpiece. In other words, one may look through a through-hole but not through a blind hole.

The attachment element 6 may be solder tin, an adhesive, welded seam a wire clip a plastic clip or a bent clip. The attachment element 6, such as any one of the aforementioned clips, may be bent to hook around a turn 20 of the canted coil spring 4. Thus, a hook portion 22 may hold the coil spring 4 in its position. A leg portion 24 of the attachment element 6 may reach through the mounting hole 8. Preferably, the leg portion 24 reaches from the hook portion 22 through to an opposite side of the wall 2 facing away from the canted coil spring 4.

In the illustrated example in figure 2 the attachment element 6 reaches through only one mounting hole 8 of the wall 2. The attachment element 6 may be fixed on the opposite side of the wall by an adhesive (such as silicone) or a mechanical bracket.

According to a further aspect, the mounting hole 8 may be a blind hole. The attachment element 6 may be held in the mounting hole by an adhesive, welding or solder tin. In this embodiment, the blind hole may be disposed on the same face of the wall 2 as the coil spring rest on.

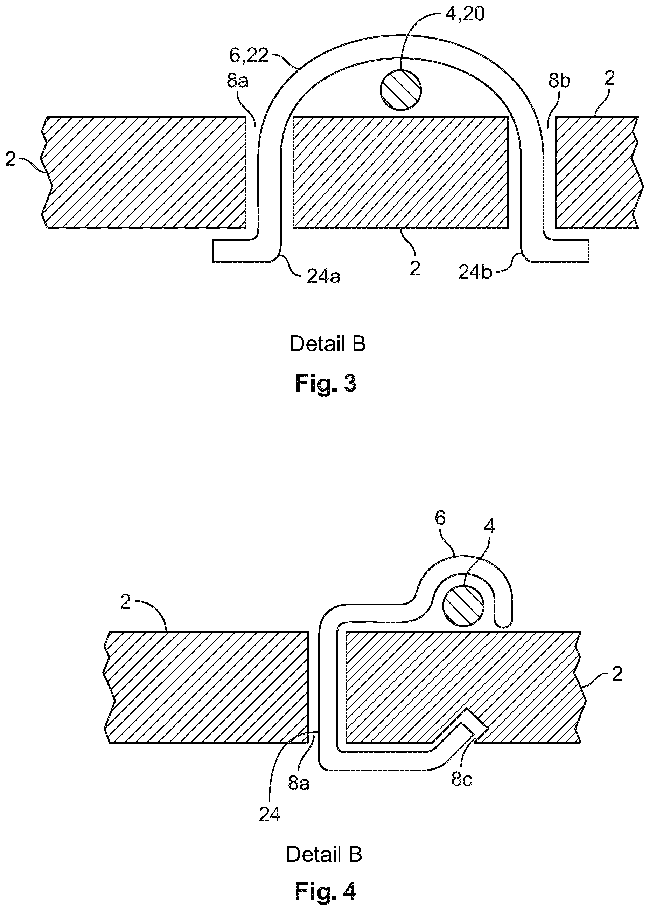

Furthermore, a detailed portion of the connector 1, which is illustrated in an enlarged view in Figures 3 and 4, is encircled in Figure 2 as Detail B.

Figure 3 illustrates an alternative of the detail B illustrated in Fig. 2. According to a further aspect, the attachment element 6 may comprise two leg portions, which is illustrated in Figure 3. The wall 2 may comprise two mounting holes 8a and 8b. The two mounting holes 8a, 8b may preferably be disposed on the wall 2, but not further apart from each other than two windings of the canted coil spring 4. When the mounting holes 8a and 8b are in such close proximity to one another the holes may be considered as a pair of mounting holes.

In the illustrated example, the mounting holes 8a and 8b are through-holes. Further, the attachment element 6 may comprise two leg portions 24a and 24b (or leg instead of leg portion) and a hook portion 22. The hook portion 22 may hook around a turn 20 of the coil spring 4. The two leg portions 24a and 24b may reach through the respective mounting hole 8a and 8b in the wall 2. On the opposite side of the wall 2 facing away from the coil spring 4, one or both of the leg portions 24a, 24b may be bent towards the wall 2. The bending of the leg portions 24a, 24b may ensure a firm attachment to the wall 2.

Figure 4 illustrates another alternative aspect of attaching the canted coil spring 4 to the wall 2. In correspondence to Figure 3, Figure 4 illustrates an alternative of the detail B illustrated in Figure 2. In the shown embodiment, the attachment element 6 comprises a hook portion 22 and only one leg portion 24. Similarly to Figure 3, the wall 2 comprises two mounting holes 8a and 8c, however, one of the mounting holes 8c is a blind hole on the opposite side of the wall facing away from the canted coil spring 4. To ensure that the attachment element 6 is firmly fixed to the wall, the leg portion 24 may further reach into the blind hole 8c. In other words, the leg portion 24 may reach through a first mounting hole 8a, which is a through hole, and then reach into a second mounting hole 8c, which is a blind hole. The tip of the hook portion 22 preferably may abut against the wall 2.

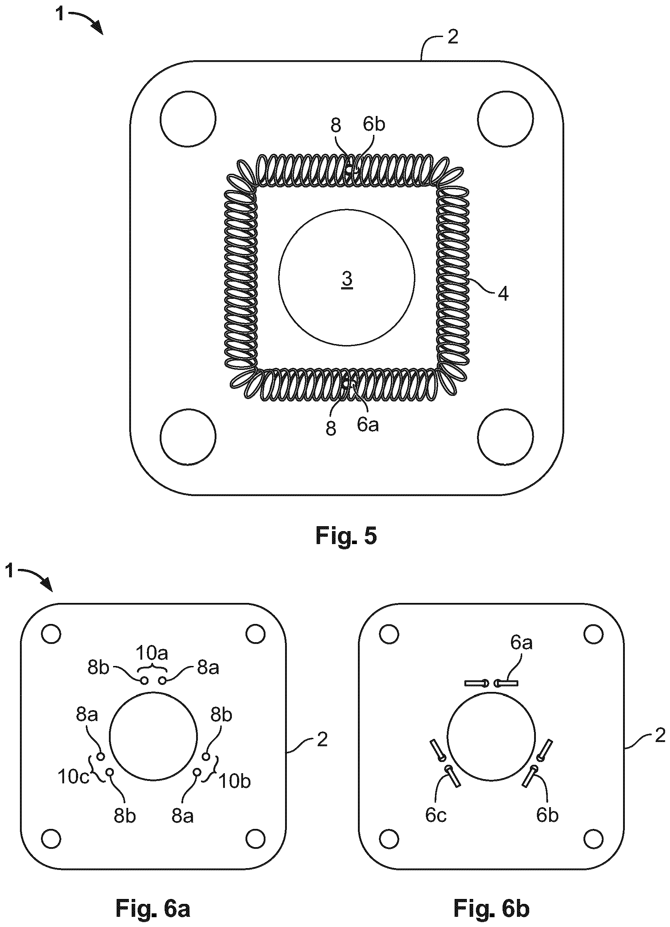

Figure 5 illustrates another aspect of the invention. In Figure 1, the canted coil spring 4 has an annular shape. However, the invention is not limited to such canted coil springs only. As shown in Figure 5, the shape of canted coil spring 4 may be based on a regular rectangular shape. Without limiting of generality, the base shape of the canted coil spring 4 may follow any closed loop path on a flat surface, such as a circle, an ellipsis, a polygon, a triangle, a rectangle, etc. If the base shape is a circle, the canted coil spring may be said to have a donut-like shape.

Further, as illustrated in Figure 5, the wall 2 may comprise at least one mounting hole 8 and at least one attachment element 6, 6b as described above in relation to the previous figures. The mounting holes 8 may be disposed on the wall 2 in positions right below of opposite edges of the canted coil spring.

Figure 6a and 6b illustrate a further aspect of the invention. Figure 6a illustrates a bottom view of a connector 1 viewed from the opposite side of the wall 2 facing away from the canted coil spring. The connector 1 comprises a wall 2 with mounting holes 8a, 8b without attachment elements. Figure 6b illustrates the same view, however with attachment elements 6a - 6c reaching through the mounting holes 8a, 8b of the connector 1 in Figure 6a.

As described in relation to Figure 3, the mounting holes 8 may be grouped in pairs 10a, 10b, 10c of mounting holes. When two mounting holes 8a and 8b are in close proximity to one another, preferably closer than the distance of two adjacent turns of the canted coil spring 4, but not closer than the diameter of the wire forming the coil spring, the two mounting holes 8a, 8b form a pair of mounting holes such as the pairs 10a, 10b, or 10c. A pair of mounting holes 10a, 10b, 10c may receive one attachment element 6a - 6c. In the shown example in Figure 6b, the attachment element 6a - 6c may be a clip, such as a wire clip a plastic clip or a bent clip. Combination of different types of clips may be used to attach the canted coil spring to the wall 2 of the connector. In an exemplary embodiment, a first clip 6a may be a wire clip, a second clip 6b may be a plastic clip, a third clip 6c may be a bent clip. This example may be generalized to a connector with two or more than 3 attachment elements 6.

The attachment elements may be arranged in a rotationally symmetric manner around a rotational axis. The rotational axis may pass perpendicularly through the center of the wall 2 and/or coil spring 4 and preferably is parallel or equal to the axial compression direction of the coil spring 4. In the shown embodiment in Figures 6a and 6b the pairs of mounting holes 10a - 10c and respectively the corresponding attachment elements 6a - 6c are arranged to form an equilateral triangle. Such an arrangement of the pair of mounting holes 10a to 10c and their corresponding attachment elements 6a - 6c may optimally ensure that the canted coil spring 4 is firmly attached to the wall 2 of the connector 1.

While in the shown examples in Figures 6a and 6b, the mounting holes of a respective pair of mounting holes are both through-holes, according to a further aspect, a pair of mounting holes may consist of a through hole and a blind hole. Also in this case, an attachment element 6 may hook around a turn of the canted coil spring 4, and a leg portion may reach through the wall 2 - via the through-hole - and be inserted into the blind hole. As described above, the blind hole preferably is disposed on the opposite side of the wall 2 facing away from the canted coil spring 4.

Alternatively, a pair of mounting holes 10 may be comprised of two blind holes that are disposed on the face of the wall 2 on which the coil spring 4 rests.

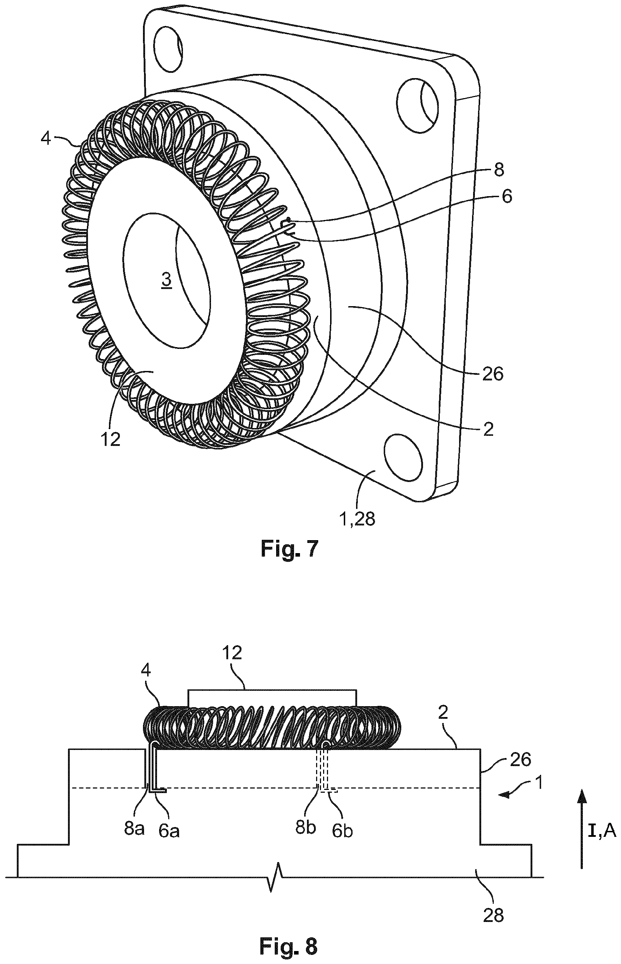

Figure 7 illustrates a further aspect of the connector 1. The connector 1 may comprise a stub axle 12 that protrudes from the wall 2 on which the canted coil spring 4 is disposed. The wall 2 itself may be a face of another stub axle that protrudes from a base 28 of the connector 1. In the shown embodiment in Figure 7 the stub axle 12 is hollow, similarly the other stub axle 26 from which the stub axle 12 protrudes may also be hollow. Thereby, a feedthrough-hole 3 of the connector 1 may be formed. The canted coil spring 4 rests or sits on the wall 2 of the other stub axle 26. At the same time, the canted coil spring 4 may enclose the stub axle 12. In other words the coil spring 4 may be supported by or rest on the stub axle 12. The canted coil spring 4 may also abut against the stub axle 12 and/or other stub axle 26.

The connector 1 also forms a connector pair with a mating connector (not shown). Typically, the mating connector may have a complementary shape to the connector 1. When the connector 1 engages with its mating connector, for example when the connector 1 is inserted to the mating connector in the insertion direction of the connector pair, the canted coil spring 4 may be compressed in the axial direction, that is, insertion direction of the connector 1.

As illustrated in Figure 7, the canted coil spring 4 is attached to the wall 2 of the connector 1 by an attachment element 6. As described above, the attachment element 6 may hook around a turn of the coil spring 4 and reach through the wall 2. The wall 2 may provide at least one mounting hole 8, preferably the wall 2 provides two mounting holes 8a, 8b that receive the respective attachment element 6 that hooks around the turn of the coil spring 4. The two mounting holes 8a, 8b may form a pair of mounting holes 10. At least one of the mounting holes 8a, 8b may be a blind hole. Preferably, one of the mounting holes 8a, 8b is a through-hole, which facilitates fixing the attachment element 6 to the wall 2.

Figure 8 illustrates another cut view from a lateral side of the connector 1, i.e. in a view perpendicular to an insertion direction I, A of the connector 1. As illustrated in Figure 7 the stub axle 12 may protrude from another stub axel 26 of the connector. The wall 2 on which the canted coil spring 4 rests may be a face of the other stub axle 26. In particular, the face may be facing towards the insertion direction I of the connector 1. As described above, the axial direction A of the canted coil spring 4, which allows for an axial compression of the canted coil spring 4, may be equal or correspond to the insertion direction I of the connector 1. In the shown embodiment, the connector 1 comprises at least two mounting holes 8a and 8b, which each receive a respective attachment element 6a and 6b to attach and hold the canted coil spring 4 in place. Advantageously, the attachment elements 6a and 6b ensure that the canted coil spring 4 remains on the wall 2, that is, the face of the other stub axle 28, even when the connector 1 is disengaged from a mating connector. At the same time, the attachment elements 6a, 6b that hook around the canted coil spring 4 may form an interlocking connection that allows for sufficient play for the canted coil spring to be compressed when needed.

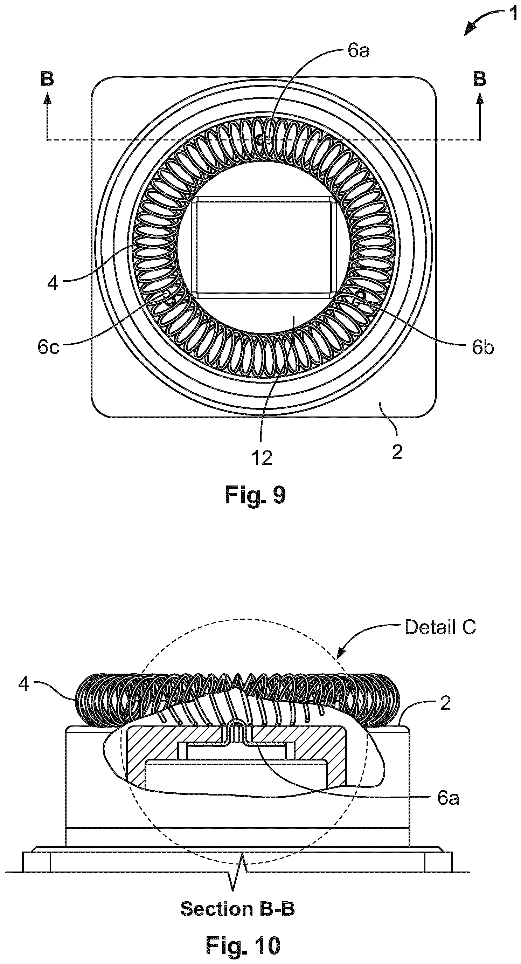

Figure 9 shows a top view against the insertion direction of an exemplary connector 1 with a stub axle 12 that protrudes from the wall 2. The stub axle may penetrate into the central opening of the canted coil spring 4. Without limiting the scope of the invention, the shown canted coil spring 4 has a donut shape, i.e. the base shape follows the form of a circle. Similarly as shown in Figures 6a and 6b, the attachment elements 6a - 6c may be arranged with rotational symmetry around a rotational axis running through the center of the canted coil spring 4. The rotational axis may extend in a parallel direction to the axial direction of the coil spring 4 respectively the insertion direction I.

Figure 10 illustrates a lateral view of attachment element 6a in the cut plane B-B in Figure 9. The attachment element 6a may be a wire clip, plastic clip or a bent clip that forms an interlocking connection around a turn of the coil spring 4.

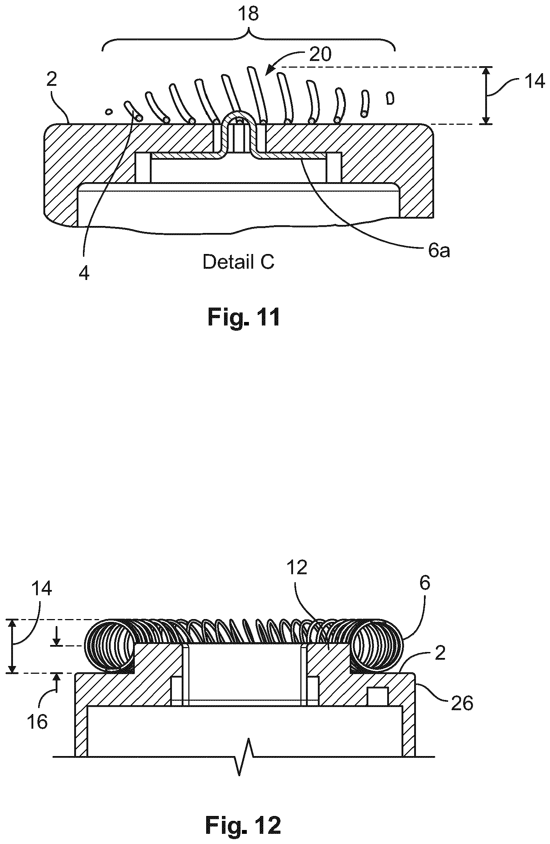

Figure 11 illustrated a magnified view of the detail C indicated in Figure 10. The canted coil spring 4 comprises a plurality of windings 20 that turn around and/or extend by following a 2-dimensional base shape of the coil spring 4. To attach the coil spring 4 to the wall 2, the attachment element 6a hooks around one turn 18 of the plurality of windings20. The height 14 of the canted coil spring 4 may be greater than the height of the stub axle 12. The height of the stub axle herein denotes the extension of the stub axle away from the wall 2 from which the stub axle 12 protrudes towards the insertion direction I of the connector 1 or towards the canted coil spring 4.

Figure 12 shows a cut side view of the connector 1 illustrated in Figure 9 running through the center of the connector and the attachment element 6a. In the shown embodiment, the height 16 of the stub axle 12 amounts to half of the height 14 of the canted coil spring 4 that rests on the wall 2. The following height ratios between the height 16 of the stub axle 12 and the height 14 of the canted coil spring 4 may be considered to advantageously shield the connector 1 from electromagnetic radiation: 2:1, 1:1, 1:2, 1:3, 1:4, and 1:5 (height of stub axle to height of coil spring).

According to another embodiment, a mounting hole 8 for attaching the coil spring 4 to the connector 1 may be disposed on the face of the stub axle 12 facing towards the coil spring 8. In this embodiment, an attachment element 6 may be hooked around a turn 18 of the windings 20 of the coil spring and reach into the mounting hole 8 of the stub axle 12. Advantageously, in this embodiment, the attachment element 6 would reach into the stub axle 12 that is disposed inside the coil spring 4 instead of the wall 2 on which the coil spring 4 rests.

### REFERENCE NUMERALS

- 1: connector
- 2: wall
- 3: feedthrough hole
- 4: canted coil spring
- 6: attachment element
- 8: mounting hole
- 8a: first mounting hole, through-hole
- 8b: second mounting hole
- 8c: blind hole
- 10a-c: pair of mounting holes
- 12: stub axle
- 14: height of canted coil spring
- 16: height of stub axle
- 18: one turn of the windings of the canted coil spring
- 20: windings of canted coil spring
- 22: hook portion
- 24: leg portion
- 26: another stub axle
- 28: base
- I: insertion direction
- A: axial compression direction

## Claims

1. An connector (1), comprising:
a wall (2) with a mounting hole (8);
a canted coil spring (4) extending along a perimeter; and
a mounting assembly adapted to attach the canted coil spring (4) to the wall (2),
the mounting assembly comprising:
an attachment element (6) adapted to be hooked around a turn (18) of the canted coil spring (4) and reaching into the mounting hole (8) of the wall (2).

2. The connector (1) according to claim 1, wherein the wall (2) comprises at least two mounting holes (8a-c), the at least two mounting holes (8a-c) including said mounting hole (8a).

3. The connector (1) according to claim 2, wherein two of the at least two mounting holes (8a-c)s form a pair of mounting holes (10a-c), wherein the pair (10a) includes said mounting hole (8), and wherein the attachment element (6a) is fixed to the wall (2) by engaging to the pair of mounting holes (10a).

4. The connector (1) according to claims 2 or 3, wherein the mounting assembly comprises a plurality of attachment elements (6a-c), each one adapted to attach the canted coil spring (4) at a respective mounting hole (8a) of the at least two mounting holes (8a, 8b) to the wall (2), and wherein the plurality of attachment elements (6a-6c) includes said attachment element (6a).

5. The connector (1) according to claim 4, wherein the attachment elements (6a-c) of the mounting assembly are arranged in an n-fold rotational symmetric arrangement around a central axis (A) of the canted coil spring (4).

6. The connector (1) according to any one of claims 1 to 5, wherein the mounting assembly comprises an attachment element (6) of the following groups of attachment elements: solder tin, an adhesive, welded seam, a clip, a wire clip, a plastic clip, or a bent clip.

7. The connector (1) according to claim 6, wherein the attachment element (6) has two legs (24a, 24b), and wherein at least one of the two legs (24a) is bent towards the wall (2) on a side of the wall (2) facing away from the canted coil spring (4).

8. The connector (1) according to any one of claims 1 to 7, wherein the canted coil spring (4) has a slant angle of less than 45°.

9. The connector (1) according to any one of claims 1 to 8, wherein the canted coil spring (4) has a slant angle between 20° and 30°.

10. The connector (1) according to any one of claims 1 to 9, wherein the wall (2) is penetrated by a feedthrough opening (3), wherein canted coil spring (4) encompasses an outer contour of the feedthrough opening (3).

11. The connector (1) according to any one of claims 1 to 10, further comprising a stub axle (12) to hold the canted coil spring (4), wherein the stub axle (12) protrudes from the wall (2) towards the canted coil spring (4).

12. The connector (1) according to any one of claims 1 to 11, wherein the canted coil spring (4) forms a closed loop.

13. The connector (1) according to any one of claims 1 to 12, wherein the connector (1) is one of a bulkhead connector, an electrical connector, a radio connector, a bulkhead feedthrough connector, a bulkhead electrical connector, a bulkhead radio connector.

14. The bulkhead connector (1) according to claim 13, wherein the wall (2) is a bulkhead.
